(19) Europäisches Patentamt
European Patent Office
Office européen des brevets

(11) **EP 4 759 854 A1**

(12) **EUROPÄISCHE PATENTANMELDUNG**

(43) Veröffentlichungstag:
 **17.06.2026  Patentblatt 2026/25**

(21) Anmeldenummer: 24220059.0

(22) Anmeldetag: **16.12.2024**

(51) Internationale Patentklassifikation (IPC):
 *C08G 18/24* (2006.01)   *C08G 18/28* (2006.01)
 *C08G 18/32* (2006.01)   *C08G 18/73* (2006.01)
 *C08G 18/78* (2006.01)

(52) Gemeinsame Patentklassifikation (CPC):
 **C08G 18/7837; C08G 18/244; C08G 18/246;
 C08G 18/283; C08G 18/3206; C08G 18/73**

(84) Benannte Vertragsstaaten:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Benannte Erstreckungsstaaten:
 **BA**
 Benannte Validierungsstaaten:
 **GE KH MA MD TN**

(71) Anmelder: **Covestro Deutschland AG
 51373 Leverkusen (DE)**

(72) Erfinder:
 • **Ludewig, Michael
  51519 Odenthal (DE)**
 • **Banh, Hung
  51371 Leverkusen (DE)**

(74) Vertreter: **Levpat
 c/o Covestro AG
 Gebäude K12
 51365 Leverkusen (DE)**

(54) **HOCHFUNKTIONELLE HYDROPHILIERTE POLYISOCYANATE UND DEREN HERSTELLUNG**

(57)   Die Erfindung betrifft hydrophilierte Polyisocyanate (P), erhältlich aus der Umsetzung (U) einer Komponente A), wobei es sich um ein mit Allophanat- und gegebenenfalls Isocyanuratgruppen modifiziertes Polyisocyanat handelt, welches einen Anteil an Allophanatgruppen $\geq 50$ mol%, bevorzugt $\geq 50$ mol % bis $\leq 99$ mol%, bevorzugt $\geq 60$ mol % bis $\leq 98$ mol%, besonders bevorzugt $\geq 70$ mol % bis $\leq 98$ mol% aufweist, jeweils bezogen auf die Gesamtmenge an Allophanatgruppen und Isocyanuratgruppen im modifizierten Polyisocyanat und bestimmt durch NMR spektroskopische Analyse, und welches erhältlich ist aus der Umsetzung (U') der Komponenten A1) einer Mischung aus A1$_1$) mindestens einem monomeren Triol und A1$_2$) mindestens einem monomeren Diol, mit A2) mindestens einem monomeren Diisocyanat, welches aliphatisch und/oder cycloaliphatisch, gebundene Isocyanatgruppen aufweist, mit einem Hydrophilierungsmittel B), wobei es sich um mindestens eine nicht-ionisch hydrophilierenden Verbindung mit mindestens einer isocyanatreaktiven Gruppe handelt. Die Erfindung betrifft ebenfalls die Verwendung der erfindungsgemäßen, hydrophilierten Polyisoycanate in oder als Beschichtungsmittel, Dichtstoffe oder Klebstoffe.

**EP 4 759 854 A1**

**Beschreibung**

Die Erfindung betrifft hydrophilierte Polyisocyanate (P), erhältlich aus der Umsetzung (U) einer Komponente A), wobei es sich um ein mit Allophanat- und gegebenenfalls Isocyanuratgruppen modifiziertes Polyisocyanat handelt, welches einen Anteil an Allophanatgruppen $\geq 50$ mol%, bevorzugt $\geq 50$ mol % bis $\leq 99$ mol%, bevorzugt $\geq 60$ mol % bis $\leq 98$ mol%, besonders bevorzugt $\geq 70$ mol % bis $\leq 98$ mol% aufweist, jeweils bezogen auf die Gesamtmenge an Allophanatgruppen und Isocyanuratgruppen im modifizierten Polyisocyanat und bestimmt durch NMR spektroskopische Analyse, und welches erhältlich ist aus der Umsetzung (U') der Komponenten A1) einer Mischung aus A1$_1$) mindestens einem monomeren Triol und A1$_2$) mindestens einem monomeren Diol, mit A2) mindestens einem monomeren Diisocyanat, welches aliphatisch und/oder cycloaliphatisch, gebundene Isocyanatgruppen aufweist, mit einem Hydrophilierungsmittel B), wobei es sich um mindestens eine nicht-ionisch hydrophilierende Verbindung mit mindestens einer isocyanatreaktiven Gruppe handelt. Die Erfindung betrifft ebenfalls die Verwendung der erfindungsgemäßen, hydrophilierten Polyisocyanate zur Herstellung von Beschichtungsmitteln, Dichtstoffen oder Klebstoffen.

Monomere Diisocyanate werden als Vernetzer in Polyurethan-Systemen aufgrund ihrer Flüchtigkeit und ihrer toxikologischen Eigenschaften praktisch nicht eingesetzt. Man bedient sich in der Regel der höhermolekularen, beispielsweise mit Uretdion-, Isocyanurat-, Iminooxadiazindion-, Urethan- oder Allophanatgruppen modifizierten Derivate. Eine Übersicht zu diesen Polyisocyanaten und ihrer Herstellungsweise ist exemplarisch in Laas et al., J. Prakt. Chem. 336, 1994, 185-200, gegeben.

Bedingt durch die ökologischen und ökonomischen Anforderungen an moderne Lacksysteme möglichst wenig oder gar kein organisches Lösungsmittel zur Viskositätseinstellung zu verwenden, besteht der Wunsch, bereits niedrigviskose Lackrohstoffe zu verwenden. Bekannt hierfür sind seit langem Polyisocyanate mit Allophanatstruktur wie sie u. a. in EP-A 0 682 012 beschrieben werden.

In der Technik werden diese durch Umsetzung eines ein- oder mehrwertigen Alkohols mit großen Mengen an überschüssigem aliphatischen und/oder cycloaliphatischen Diisocyanat hergestellt (vgl. GB-A 994 890, EP-A 0 000 194 oder EP-A 0 712 840). Anschließend erfolgt die Entfernung nicht reagierten Diisocyanats mittels Abdestillation im Vakuum.

Polyisocyanate auf Allophanatbasis können auch dazu verwendet werden besonders hochfunktionelle Vernetzer zur Verfügung zu stellen. Solche Systeme erreichen häufig besonders hohe Resistenzen gegen Chemikalien oder gegen mechanische Einflüsse. WO 2019/062383 A1 und EP 4 303 246 A1 beschreiben Allophanat-modifizierte Polyisocyanate auf Basis von TMP. Diese sind hochfunktionell, weisen gleichzeitig aber auch eine hohe Viskosität auf. Ersteres führt in der Anwendung zu Endprodukten mit hoher Härte und hoher chemischer Beständigkeit. Die hohe Viskosität jedoch erschwert die Handhabung der Polyisocyanate. Hydrophilierte Polyisocyanate werden in den beiden Schriften nicht beschrieben.

Eine Möglichkeit, die Verwendung von Lösemitteln zu reduzieren oder zu vermeiden ist die Verwendung wasserbasierter Polyisocyanate. Diese können durch den Einbau hydrophiler Gruppen erhalten werden, wie z.B. in der EP0206059A2 beschrieben. Hier werden Isocyanurat-haltige System mit monofunktionellen Polyethylenoxidpolyethern modifiziert und so hydrophiliert.

Es wurde auch schon der Versuch unternommen, solche Systeme durch Allophanatisierung in der Funktionalität weiter zu erhöhen, um Eigenschaften wie Chemikalienresistenz oder Kratzfestigkeit weiter zu steigern (EP0959087A1, WO2001/40347). Solche Systeme haben eine erhöhte Funktionalität und daher eine erhöhte Resistenz. Dieser Effekt kann aber nicht beliebig gesteigert werden, weil das zugrundeliegende Isocyanurat über die Allophanatisierungsreaktion aufpolymerisiert wird und so die Viskosität immer weiter gesteigert wird.

Die Aufgabe der vorliegenden Erfindung bestand daher in der Bereitstellung von wasserdispergierbaren, hochfunktionellen, gleichzeitig aber niedrigviskosen Allophanat-modifizierten Polyisocyanaten, die zu Endprodukten, wie beispielsweise Beschichtungen, mit hoher Härte und hoher chemischer Beständigkeit führen.

Diese Aufgabe wurde durch den Gegenstand des Anspruch 1 gelöst.

Gegenstand der vorliegenden Erfindung sind hydrophilierte Polyisocyanate (P), erhältlich aus der Umsetzung (U)

A) eines mit Allophanat- und gegebenenfalls Isocyanuratgruppen modifizierten Polyisocyanats, welches einen Anteil an Allophanatgruppen $\geq 50$ mol%, bevorzugt $\geq 50$ mol % bis $\leq 99$ mol%, bevorzugt $\geq 60$ mol% bis $\leq 98$ mol%, besonders bevorzugt $\geq 70$ mol % bis $\leq 98$ mol% aufweist, jeweils bezogen auf die Gesamtmenge an Allophanatgruppen und Isocyanuratgruppen im modifizierten Polyisocyanat und bestimmt durch NMR spektroskopische Analyse,

und welches erhältlich ist aus der Umsetzung (U')

A1) einer Mischung aus A1$_1$) mindestens einem monomeren Triol und A1$_2$) mindestens einem monomeren Diol, mit

A2) mindestens einem monomeren Diisocyanat, welches aliphatisch und/oder cycloaliphatisch, gebundene Isocyanatgruppen aufweist,

mit

B) mindestens einer nicht-ionisch hydrophilierenden Verbindung mit mindestens einer isocyanatreaktiven Gruppe, gegebenenfalls in Anwesenheit

C) mindestens eines, die Reaktion der Isocyanatgruppen der Komponente A) mit den isocyanatreaktiven Gruppen der Komponente B) beschleunigenden Katalysators und/oder

D) mindestens eines Hilfs- und Zusatzstoffs.

Mischung A1):

Als Komponente A1$_1$) kommen monomere Triole zum Einsatz, mit vorzugsweise bis zu 15 Kohlenstoffatomen. Beispielhaft seien genannt: Glycerin, 1,1,1-Trimethylolethan, 1,1,1-Trimethylolpropan, 1,2,6-Hexantriol, 1,2,4- und 1,3,5-Trihydroxycyclohexan und 1,3,5-Tris(2-hydroxyethyl)-isocyanurat. Bevorzugt wird 1,1,1-Trimethylolpropan als Komponente A1$_I$) eingesetzt.

Als Komponente A1$_2$) kommen monomere Diole zum Einsatz, mit vorzugsweise bis zu 15 Kohlenstoffatomen. Beispielhaft seien genannt: Esteralkohole, wie z.B. Glycerinmonoacetat und Glycerinmonobutyrat, die isomeren Butandiole, insbesondere 1,3-Butandiol und 1,4-Butandiol, die isomeren Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol und Bis-(2-hydroxyethyl)-hydrochinon. Bevorzugt werden 1,3-Butandiol und/oder 1,4-Butandiol als Komponente A1$_2$) eingesetzt.

In einer bevorzugten Ausführungsform beträgt das Gewichtverhältnis von A1$_1$) zu A1$_2$) von 1 : 10 bis 10 : 1, bevorzugt von 1 : 5 bis 5 : 1, besonders bevorzugt von 1 : 2 bis 2 : 1.

Es ist auch möglich neben der Mischung A1) weitere Mono- und/oder Polyole mit einer Funktionalität ≥ 4 A1') bei der Umsetzung (U') zu verwenden, wobei deren Anteil in Summe maximal 20 Gew.-% (≥ 0 bis ≤ 20 Gew.-%), bevorzugt maximal 10 Gew.-% (≥ 0 bis ≤ 10 Gew.-%), jeweils bezogen auf das Gewicht der Mischung A1) beträgt.

Als Beispiele solcher Mono- und Polyole mit einer Funktionalität ≥ 4 (A1') seien genannt ein- oder mehrwertige Alkohole mit bis zu 15 Kohlenstoffatomen, vorzugsweise 2 bis 6 Kohlenstoffatomen, wie z.B. Methanol, Ethanol, n-Propanol, Isopropanol, n-Butanol, n-Hexanol, 2-Ethyl-1-hexanol; Etheralkohole, wie z.B. 1-Methoxy-2-propanol, 3-Ethyl-3-hydroxymethyloxetan, Tetrahydrofurfurylalkohol; Esteralkohole, wie z.B. Ethylenglykolmonoacetat, Propylenglykolmonolaurat, Glycerindiacetat oder 2,2,4-Trimethyl-1,3-pentandiol-monoisobutyrat; ungesättigte Alkohole wie z.B. Allylalkohol, 1,1-Dimethylallylalkohol oder Oleinalkohol; araliphatische Alkohole wie z.B. Benzylalkohol; Tetrahydrofurfurylalkohol; 2,2-Bis(hydroxymethyl)-1,3-propandiol, Sorbitol, Mannitol.

Es können auch Mischungen der oben genannten Alkohole A1') verwendet werden.

Diisocyanate A2):

Vorliegend ist der Begriff "aliphatisch" definiert als nicht-aromatische Kohlenwasserstoffgruppen, die gesättigt oder ungesättigt sind.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind.

Erfindungsgemäß werden monomere Diisocyanate, welche aliphatisch und/ oder cycloaliphatisch, gebundenen Isocyanatgruppen aufweisen, verwendet.

Geeignete monomere Diisocyanate können nach beliebigen Verfahren, z.B. durch Phosgenierung oder auf phosgenfreiem Weg, beispielsweise durch Urethanspaltung, hergestellt werden.

Geeignete monomere Diisocyanate, im Folgenden auch Ausgangsdiisocyanate genannt, sind beispielsweise solche des Molekulargewichtsbereiches 154 bis 400 g/mol, wie z.B. 1,6-Diisocyanatohexan (HDI), 1,5-Diisocyanatopentan (PDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H$_{12}$-MDI), 1,3-und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyana-

to-2,2',5,5'-tetramethyl-1,1'-bi(cyclohexyl), 1,8-Diisocyanato-p-menthan, 1,3-Diisocyanatoadamantan, 1,3-Dimethyl-5,7-diisocyanatoadamantan, sowie beliebige Gemische solcher Diisocyanate. Weitere ebenfalls geeignete Diisocyanate finden sich darüber hinaus beispielsweise in Justus Liebigs Annalen der Chemie, 562, 1949, 75-136.

Als Ausgangsdiisocyanate besonders bevorzugt sind aliphatische Diisocyanate der genannten Art, 1-Isocyanato-3,3,5 -trimethyl-5 -isocyanatomethylcyclohexan, 2,4' - und 4,4' -Diisocyanatodicyclohexylmethan, sowie beliebige Gemische dieser Diisocyanate. Insbesondere geeignet sind 1,5-Diisocyanatopentan (PDI) und 1,6-Diisocyanatohexan (HDI) und deren Gemische.

Für den Fall, dass Mischungen verschiedener Ausgangsdiisocyanate zum Einsatz kommen, ist es ganz besonders bevorzugt, dass ≤ 30 Gew.-%, bevorzugt ≤ 10 Gew.-% und besonders bevorzugt ≥ 0 bis ≤ 5 Gew.- % der insgesamt eingesetzten Ausgangsdiisocyanate cycloaliphatische Diisocyanate sind und der Rest aliphatische Diisocyanate sind.

Zur Herstellung der mit Allophanat- und gegebenenfalls Isocyanuratgruppen modifizierten Polyisocyanate (A) wird eine Zusammensetzung enthaltend oder bestehend aus Komponente A1), A2) und gegebenenfalls A1') zur Reaktion gebracht.

Dabei werden die Ausgangsdiisocyanate der Komponente B) und hydroxyfunktionellen Verbindungen der Komponenten A) und sofern vorhanden A'), vorzugsweise in einem Äquivalentverhältnis von Isocyanatgruppen zu Hydroxylgruppen von 4 : 1 bis 200 : 1, vorzugsweise von 5 : 1 bis 50 : 1 und besonders bevorzugt 7 : 1 bis 30 : 1, umgesetzt.

Die Allophanatisierung ist ein zweistufiges Verfahren, bei dem zunächst eine Hydroxyfunktion mit einer Isocyanatgruppe zu einem Urethan reagiert. Dieses wird anschließend mit einer weiteren Isocyanatgruppe zu einem Allophanat weiter umgesetzt. Diese beiden Prozesse können sowohl gleichzeitig als auch nacheinander durchgeführt werden. Dabei ist ein sequenzielles Vorgehen bevorzugt, um die entstehende Exothermie besser kontrollieren zu können.

Die Urethanisierung wird bevorzugt thermisch und ohne Katalysator durchgeführt, kann aber gleichwohl auch katalysiert bei geringerer Temperatur erfolgen. Dazu kommen die dem Fachmann bekannten Urethanisierungskatalysatoren in Frage, wie. z.B. Organozinnverbindungen oder aminische Katalysatoren. Als Organozinnverbindungen seien beispielhaft genannt: Dibutylzinndiacetat, Dibutylzinndilaurat, Dibutylzinnbis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden. Weitere Beispiele für erfindungsgemäß einsetzbare Urethanisierungskatalysatoren sind anorganische Zinnverbindungen wie z.B. $SnCl_2$ oder zinnfreie Verbindungen, wie z.B. Salze des Bismuths, zB. Bismuthoctoat oder anderer Metalle wie z.B. Zinkverbindungen, Titanverbindungen oder Zirkoniumverbindungen. Es kann auch schon der in der anschließenden Allophanatisierungsreaktion verwendete Katalysator eingesetzt werden. Diese würde dann bei geringerer Temperatur und/oder geringerer Konzentration an Katalysator erfolgen, so dass in diesem Schritt noch keine oder nur wenig Allophanatisierungsreaktion auftritt.

Es ist auf diese Weise ebenfalls möglich, schon die vollständige Menge an Allophanatisierungskatalystor bei erhöhter Temperatur einzusetzen und die zweistufige Verfahrensweise zu einer einstufigen Umsetzung zu vereinfachen. Dies ist aber nicht bevorzugt, so dass der Allophanatisierungskatalysator erst dann zugesetzt wird, wenn die Urethangruppen ganz oder anteilig zu Allophanatgruppen umgesetzt werden sollen.

Die anschließende Umsetzung zum Allophanat kann unkatalysiert als thermisch induzierte Allophanatisierung durchgeführt werden. Bevorzugt kommen zur Reaktionsbeschleunigung aber geeignete Katalysatoren zum Einsatz. Es können Katalysatoren eingesetzt werden, die die Bildung von Allophanatgruppen oder aber von Allophanat- und gleichzeitig auch von Isocyanuratgruppen beschleunigen.

Geeignete Katalysatoren sind beispielsweise einfache tertiäre Amine, wie beispielsweise Triethylamin, Tributylamin, N,N-Dimethylanilin, N-Ethylpiperidin, N,N'-Dimethylpiperazin, oder tertiäre Phosphine, wie beispielsweise Triethylphosphin, Tributylphosphin oder Dimethylphenylphosphin.

Weitere geeignete Katalysatoren sind die in GB 2 221 465 beschriebenen tertiären Hydroxyalkylamine, wie beispielsweise Triethanolamin, N-Methyldiethanolamin, Dimethylethanolamin, N-Isopropyldiethanolamin und 1-(2-Hydroxyethyl)-pyrrolidin oder die aus GB 2 222 161 bekannten Katalysatorsysteme, die aus Mischungen von tertiären bicyclischen Aminen, wie beispielsweise DBU, mit einfachen aliphatischen Alkoholen mit niedrigem Molekulargewicht bestehen.

Ebenfalls als Katalysatoren geeignet sind eine Vielzahl unterschiedlicher Metallverbindungen.

Geeignet sind beispielsweise die in der DE-A 3 240 613 als Katalysatoren beschriebenen Octoate und Naphthenate von Mangan, Eisen, Kobalt, Nickel, Kupfer, Zink, Zirkonium, Cer oder Blei oder deren Mischungen mit Acetaten von Lithium, Natrium, Kalium, Calcium oder Barium; die aus DE-A 3 219 608 bekannten Natrium- und Kaliumsalze von linearen oder verzweigten Alkancarbonsäuren mit bis zu 10 Kohlenstoffatomen, wie diejenigen der Propionsäure, Buttersäure, Valeriansäure, Capronsäure, Heptansäure, Caprylsäure, Pelargonsäure, Caprinsäure und Undecylensäure; die aus EP-A 0 100 129 bekannten Alkali- oder Erdalkalimetallsalze von aliphatischen, cycloaliphatischen oder aromatischen Mono- und Polycarbonsäuren mit 2 bis 20 Kohlenstoffen, wie beispielsweise Natriumbenzoat oder Kaliumbenzoat; die aus GB 1 391 066 A und GB 1 386 399 A bekannten Alkalimetallphenoxide, wie beispielsweise Natriumphenoxid oder Kaliumphenoxid; die aus GB 809 809 bekannten Alkali- und Erdalkalimetalloxide, -hydroxide, -carbonate, - alkoxide und -phenoxide, Alkalimetallsalze enolisierbarer Verbindungen, sowie Metallsalze schwacher aliphatischer und/oder cycloaliphatischer Carbonsäuren, wie beispielsweise Natriummethanolat, Natriumacetat, Kaliumacetat, Natriumacetoacetat, Blei-2-ethylhexanoat und Bleinaphthenat; die aus der EP-A 0 056 158 und der EP-A 0 056 159 bekannten, mit Kronenethern oder Polyetheralkoholen komplexierten basischen Alkalimetallverbindungen, wie beispielsweise komplexierte Natrium- oder Kaliumcarboxylate; das aus der EP-A 0 033 581 bekannte Pyrrolidinon-Kaliumsalz; die aus EP-A 2 883 895 bekannten monocyclischen oder polycyclischen Komplexverbindungen des Titans, Zirkoniums und/oder Hafniums, wie beispielsweise Zirkoniumtetra-n-butylat, Zirkoniumtetra-2-ethylhexanoat und Zirkoniumtetra-2-ethylhexylat; sowie Zinnverbindungen der im European Polymer Journal, 16, 1979, 147-148 beschriebenen Art, wie beispielsweise Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Weitere geeignete Katalysatoren sind beispielsweise die aus DE-A 1 667 309, EP-A 0 013 880 und EP-A 0 047 452 bekannten quartären Ammoniumhydroxide, wie beispielsweise Tetraethylammoniumhydroxid, Trimethylbenzylammoniumhydroxid, N-(2-Hydroxyethyl)-N,N-Dimethyl-N-(2,2'-dihydroxymethylbutyl)-ammoniumhydroxid und 1-(2-Hydroxyethyl)-1,4-diazabicyclo[2.2.2]octanhydroxid (Monoaddukt von Ethylenoxid und Wasser an 1,4-Diazabicyclo[2.2.2] octan); die aus EP-A 37 65 oder EP-A 10 589 bekannten quartären Hydroxyalkylammoniumhydroxide, wie beispielsweise N, N, N-Trimethyl-N-(2-hydroxyethyl)-ammoniumhydroxid, die aus DE-A 2631733, EP-A 0 671 426, EP-A 1 599 526 und US 4,789,705 bekannten Trialkylhydroxyalkylammoniumcaboxylate, wie beispielsweise N, N, N-Trimethyl-N-2-hydroxypropyl-ammonium p-tert-butylbenzoat und N, N, N-Trimethyl-N-2-hydroxypropylammonium 2-ethylhexanoat; die aus EP-A 1 229 016 bekannten quartären Benzylammoniumcarboxylate, wie beispielsweise N-Benzyl-N,N-dimethyl-N-ethyl-lammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)-ammonium-2-ethylhexanoat oder N,N,N-Tributyl-N-(4-methoxybenzyl)-ammoniumpivalat; die aus WO 2005/087828 bekannten tetrasubstituierten Ammonium-$\alpha$-hydroxycarbo-xylate, wie beispielsweise Tetramethylammoniumlactat; die aus EP-A 0 339 396, EP-A 0 379 914 und EP-A 0 443 167 bekannten quartären Ammonium- bzw. Phosphoniumfluoride, wie beispielsweise N-Methyl-N,N,N-trialkylammoniumf-luoride mit $C_8$-$C_{10}$-Alkylresten, N,N,N,N-Tetra-n-butylammoniumfluorid, N,N,N-Trimethyl-N-benzylammoniumfluorid, Tetramethylphosphoniumfluorid, Tetraethylphosphoniumfluorid oder Tetra-n-butylphosphoniumfluorid; die aus EP-A 0 798 299, EP-A 0 896 009 und EP-A 0 962 455 bekannten quartären Ammonium- und Phosphoniumpolyfluoride, wie beispielsweise Benzyltrimethylammoniumhydrogenpolyfluorid; die aus EP-A 0 668 271 bekannten Tetraalkylammoniumalkylcarbonate, die durch Reaktion von tertiären Aminen mit Dialkylcarbonaten erhältlich sind; oder quartäre Ammonioalkylcarbonate mit Betainstruktur; die aus WO 1999/023128 bekannten quartären Ammoniumhydrogencarbonate, wie beispielsweise Cholinbicarbonat; die aus EP 0 102 482 bekannten, aus tertiären Aminen und alkylierenden Estern von Phosphorsäuren erhältlichen quartären Ammoniumsalze, wie beispielsweise Reaktionsprodukte von Triethylamin, DABCO oder N-Methylmorpholin mit Dimethylmethanphosphonat; oder die aus WO 2013/167404 bekannten tetrasubstituierten Ammoniumsalze von Lactamen, wie beispielsweise Trioctylammoniumcaprolactamat oder Dodecyltrimethylammoniumcaprolactamat.

Diese Katalysatoren können sowohl einzeln als auch in Form beliebiger Mischungen untereinander eingesetzt werden.

Die Katalysatoren werden im Allgemeinen in einer Menge von 0,0005 bis 5,0 Gew.-%, vorzugsweise von 0,0010 bis 1,0 Gew.-% und besonders bevorzugt von 0,0015 bis 0,1 Gew.-%, jeweils bezogen auf die Menge der eingesetzten Ausgangsdiisocyanate A2), eingesetzt.

Die Katalysatoren werden entweder als solche oder gelöst in einem geeigneten organischen Lösungsmittel zugegeben. Bevorzugte Katalysator-Lösungsmittel sind solche, die gegenüber Isocyanaten reaktive Gruppen aufweisen und entsprechend in das Polymer eingebaut werden können. Dies sind beispielsweise ein- oder mehrwertige Alkohole wie Methanol, Ethanol, *n*-Propanol, Isopropanol, *n*-Butanol, *n*-Hexanol, 2-Ethyl-1-hexanol, Ethylenglycol, Propylenglycol, Isomere des Butandiols, 2-Ethyl-1,3-hexandiol, Glycerin, Etheralkohole wie 1-Methoxy-2-propanol, 3-Ethyl-3-hydroxy-methyloxetan, Tetrahydrofurfurylalkohol, Ethylenglycolmonomethylether, Ethylenglycolmonobutylether, Dietyhlenglycol-monomethylether, Dietyhlenglycolmonoethylether, Dietyhlenglycolmono-butylether, Diethylenglycol, Dipropylenglycol, Polyethylenglycole, Polypropylenglycole, gemischte Polyethylen-/Polypropylenglycole sowie deren Monoalkylether, Esteralkohole wie Ethylenglycolmonoacetat, Propylenglycolmonolaurat, Glycerindiacetat, Glycerinmonobutyrat oder 2,2,4-Trimethyl-1,3-pentandiolmonoisobutyrat, ungesättigte Alkohole wie Allylalkohol, 1,1-Dimethylallylalkohol oder Oleylalkohol, araliphatische Alkohole wie Benzylalkohol oder monosubstituierte Amide wie N-Methylformamid, N-Methylacetamid, Cyanoacetamid oder 2-Pyorrolidinon oder Mischungen solcher Lösungsmittel.

Der Verdünnungsgrad der Katalysatorlösungen entspricht typischerweise einer Konzentration von 0,05 bis 20 Gew.-%, vorzugsweise 0,1 bis 10 Gew.-%, besonders bevorzugt 0,5 bis 5 Gew.-%.

Die Mengen der als Katalysator-Lösungsmittel eingesetzten Alkohole werden nicht zu den Mengen an eingesetzten Komponenten A1), A1') bzw. B) gerechnet.

Die Umsetzung (U') erfolgt vorzugsweise unter Inertgasatmosphäre bei einer Temperatur im Bereich von 0 °C bis 150 °C, bevorzugt im Bereich zwischen 40 °C und 130 °C und besonders bevorzugt zwischen 70 °C und 120 °C.

Bevorzugt wird die Allophanatisierung solange fortgeführt, bis alle Urethangruppen weitgehend zu Allophanatgruppen umgesetzt wurden. Der Umsetzungsgrad beträgt hier vorzugsweise mindestens 70% und besonders bevorzugt mindesten 80%.

Nachdem der gewünschte Umsetzungsgrad erreicht ist, kann die Umsetzung gestoppt werden, um im Anschluss Nebenreaktionen zu vermeiden. Dies kann beispielsweise durch Abkühlen der Reaktionsmischung erfolgen. Vorzugsweise erfolgt das Abstoppen durch Zugabe eines Katalysatorgifts und optional einer anschließenden Erwärmung der Reaktionsmischung auf eine Temperatur oberhalb von 80 °C.

Geeignete Katalysatorgifte (Stopper) sind dem Fachmann bekannt. Es handelt sich dabei beispielsweise um Salzsäure, Phosphorsäure, Phosphonsäure, Carbonsäurechloride wie Acetylchlorid, Benzoylchlorid oder Isophthaloyldichlorid, Sulfonsäuren oder Sulfonsäureester, wie beispielsweise Methansulfonsäureester, p-Toluolsulfonsäure, Trifluormethansulfonsläure, Perfluorbutansulfonsäure, Dodecylbenzolsulfonsäure, p-Toluolsulfonsäuremethylester, p-Toluolsulfonsäureetyhlester, Mono- oder Dialkylphosphate wie beispielsweise Tridecylphosphat, Dibutylphosphat, Dioctylphosphat, oder auch silylierte Säuren wie beispielsweise Methansulfonsäure-trimethylsilylester, Trifluormethansulfonsäure-trimethylsilylester, Tris(trimethylsilyl)phosphat oder Diethyl(trimethylsily)phosphat.

Die zum Abstoppen der Reaktion benötigte Menge des Katalysatorgifts hängt wesentlich von der eingesetzten Menge des Katalysators ab. Grundsätzlich ist eine äquivalente Menge des Stoppers erforderlich, aber da ein Teil des Katalysators anderweitig desaktiviert werden kann, kann auch eine geringere Menge an Stopper ausreichend sein.

Auch das Katalysatorgift kann als solches oder in Lösung zugegeben werden, wobei sich als Lösungsmittel beispielsweise die zuvor aufgelisteten Katalysator-Lösungsmittel eignen. Neben diesen Lösungsmitteln können auch die Ausgangsisocyanate als Lösungsmittel für die Katalysatorgifte verwendet werden.

Nachdem die Reaktion beendet wurde, erfolgt bevorzugt eine Abtrennung vom Ausgangsdiisocyanat aus dem Reaktionsprodukt. Diese erfolgt vorzugsweise destillativ, beispielsweise bei einem Druck unterhalb von 5 mbar, bevorzugt unterhalb von 1 mbar und besonders bevorzugt unterhalb von 0.5 mbar und beispielsweise bei einer Temperatur im Bereich von 100 bis 200 °C, vorzugsweise im Bereich von 120 bis 180 °C. Der Restgehalt an monomerem Diisocyanat nach der Destillation beträgt vorzugsweise ≤ 0,50 Gew.-%, besonders bevorzugt ≤ 0,3 Gew.-% und besonders bevorzugt < 0,10 Gew.-%.

Vorzugsweise weisen die mit Allophanatgruppen und gegebenenfalls Isocyanuratgruppen modifizierten Polyisocyanate (A eine mittlere Isocyanatfunktionalität ≥ 4 und/oder ein gewichtsmittleres Molekulargewicht von ≥ 1000 g/mol, besonders bevorzugt eine mittlere Isocyanatfunktionalität ≥ 5 und/oder ein gewichtsmittleres Molekulargewicht von ≥ 1500 g/mol bestimmt nach EN ISO 13885-1:2021-11, auf.

Vorliegend wird die mittlere Isocyanatfunktionalität des modifizierten Polyisocyanats (A) nach folgender Formel bestimmt:

$$F(GPC) = \frac{Mn(GPC)}{100 \times 42 \over \%NCO(Titr.)}$$

Worin der Isocyanatgruppengehalt als Gew.-% angegeben ist und titrimetrisch nach DIN EN ISO 11909:2007-05 bestimmt wird und das zahlenmittlere Molekulargewicht durch GPC nach DIN EN ISO 13885-1:2021-11 unter Verwendung von Polystyrol als Standard und Tetrahydrofuran als Eluent bestimmt wird.

Vorzugsweise weisen die mit Allophanatgruppen und gegebenenfalls Isocyanuratgruppen modifizierten Polyisocyanate (A) eine Viskosität von maximal 50.000 mPas bei 23 °C, bevorzugt maximal 25.000 mPas bei 23 °C, besonders bevorzugt maximal 10.000 mPas bei 23 °C auf, wobei die Viskosität bestimmt wird gemäß DIN EN ISO 3219:1994-10 bei einer Scherrate von 250 s-1.

Die mit Allophanat- und gegebenenfalls Isocyanuratgruppen modifizierten Polyisocyanaten (A) werden, vorzugsweise nach Aufreinigung, durch Reaktion mit Komponente B) hydrophiliert (Umsetzung U).

Hydrophilierungskomponente B):

Bei Komponente B) handelt es sich um nicht-ionisch hydrophilierende Verbindungen mit mindestens einer isocyanatreaktiven Gruppe.

Dies sind beispielsweise einwertige, im statistischen Mittel 5 bis 70, bevorzugt 6 bis 40 und besonders bevorzugt 7 bis 20 Alkylenoxideinheiten pro Molekül aufweisende Polyalkylenoxidpolyetheralkohole mit mindestens 30 Gew.-% Ethylenoxideinheiten, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole sowie Diethylenglykol-monoalkylether.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bevorzugt handelt es sich bei den Polyalkylenoxidpolyetheralkoholen um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Besonders bevorzugt sind reine Polyethylenoxidpolyether.

Die erfindungsgemäßen, hydrophilierten Polyisocyanate (P) sind erhältlich durch Umsetzung (U) der Komponenten A) und B) in einem Äquivalentverhältnis von Isocyanatgruppen der Komponente A) zu isocyanatreaktiven Gruppen der Komponente B) von 1 : 0,5 bis 1 : 0,02, vorzugsweise von 1 : 0,3 bis 1 : 0,05.

Die Umsetzung kann in Anwesenheit von Katalysatoren C) und/oder Hilfs- und Zusatzstoffen D) erfolgen.

Katalysatoren C):

Als Katalysatoren, die die Reaktion der Isocyanatgruppen der Komponente A) mit den isocyanatreaktiven Gruppen der Komponente B) beschleunigenden können, kommen die bereits vorangehend beschriebenen Urethanisierungs-Katalysatoren in Betracht.

Hilfs- und Zusatzstoffe D):

Es können die in der Lacktechnologie bekannten Hilfs- und Zusatzstoffe wie z.B. UV-Absorber, HALS-Stabilisatoren, Pigmente einschließlich Metallic-Effektpigmente, Farbstoffe, Mattierungsmittel, Füllstoffe, Verlaufs-, Benetzungs- und Entlüftungsadditive, Slip-Additive, Nanopartikel, Anti-Vergilbungsadditive, Verdicker und Additive zur Reduktion der Oberflächenspannung eingesetzt werden.

Zu Komponente D) zählen auch Lösemittel. Es können die gleichen Lösemittel eingesetzt werden, wie bereits zuvor bezüglich der Synthese von Polyisocyanat P' ausgeführt. Die dort genannten Vorzugsbereiche gelten hier analog. Es ist aber nicht bevorzugt, Lösemittel einzusetzen.

Die erfindungsgemäßen hydrophilierten Polyisocyanate (P) zeichnen sich durch einen Anteil an Allophanatgruppen von mindestens 50 mol % ($\geq$ 50 mol% bis $\leq$ 100 mol%), bezogen auf die Gesamtmenge an Allophanatgruppen und Isocyanuratgruppen in den hydrophilierten Polyisocyanaten (P), aus. Bevorzugt weisen sie einen Anteil an Allophanatgruppen $\geq$ 50 mol% bis $\leq$ 99 mol%, besonders bevorzugt $\geq$ 60 mol% bis $\leq$ 98 mol%, ganz besonders bevorzugt $\geq$ 70 mol% bis $\leq$ 98 mol%, jeweils bezogen auf die Gesamtmenge an Allophanatgruppen und Isocyanuratgruppen in den hydrophilierten Polyisocyanaten (P), auf.

Der Isocyanuratgruppen-Anteil beträgt entsprechend maximal 50 mol% ($\geq$ 0 mol% bis $\leq$ 50 mol%), bevorzugt $\geq$ 1 mol% bis $\leq$ 50 mol%, besonders bevorzugt $\geq$ 2 mol% bis $\leq$ 40 mol%, ganz besonders bevorzugt $\geq$ 2 mol% bis $\leq$ 30 mol%, bezogen auf die Gesamtmenge an Allophanatgruppen und Isocyanuratgruppen in den hydrophilierten Polyisocyanaten (P).

Die Gehalte an Allophanatgruppen und Isocyanuratgruppen in den hydrophilierten Polyisocyanaten (P) werden durch NMR spektroskopische Analyse bestimmt.

Neben der Modifizierung mit Allophanatgruppen und gegebenenfalls Isocyanuratgruppen, sowie den Urethangruppen aus der Hydrophilierung, können die hydrophilierten Polyisocyanate (P) in untergeordneten Mengen zudem auch Harnstoff-, Uretdion- und/oder Iminooxadiazindiongruppen aufweisen. Auch können beispielsweise aus einer unvollständigen Allophanatisierung Urethangruppen erhalten bleiben. Ähnlich können beispielsweise Uretdiongruppen und Iminooxadiazindiongruppen als Nebenreaktion der Trimerisierung auftreten.

In untergeordneten Mengen bedeutet, dass der Anteil an Harnstoff-, Uretdion- und/oder Iminooxadiazindiongruppen in Summe maximal 15 mol% ($\geq$ 0 bis $\leq$ 15 mol%), bevorzugt maximal 10 mol% ($\geq$ 0 bis $\leq$ 10 mol%), jeweils bezogen auf die Gesamtmenge an Allophanatgruppen und Isocyanuratgruppen im hydrophiliertren Polyisocyanat (P), beträgt. Ihre Gehalte werden ebenfalls mittels NMR spektroskopischer Analyse bestimmt.

Die Gehalte (mol%) an Allophanatgruppen und Isocyanuratgruppen, sowie der Urethan-, Harnstoff-, Uretdion- und/oder Iminooxadiazindiongruppen werden vorzugsweise aus den Integralen protonenentkoppelter $^{13}$C-NMR-Spektren errechnet. Es wurde dazu ein Bruker AV III HD 600 NMR Spektrometer mit Probenkopf Z150361_001 (CP BBO 600SS3 BB-H&F-05 ZE T) bei 512 Scans verwendet. Bei einer Repititionszeit (D1) von 4 s und einer Messzeit (AQ) von 1,57s wird erfahrungsgemäß davon ausgegangen, dass sehr ähnliche Carbonyl-Kohlenstoffatome über Integration vergleichbar sind. Im Falle von in CDCls gelösten auf Hexamethylendiisocyanat basierenden Polyisocyanaten weisen die einzelnen Strukturelemente folgende chemische Verschiebungen (in ppm) auf: Allophanat: 155.7 und 153.8 (je ein C-Atom); Isocyanurat: 148.4 (drei C-Atome); Iminooxadiazindion: 147.8, 144.3 und 135.3 (je ein C-Atom); Uretdion: 157.1 (zwei C-Atome); Urethan: 156,3 (ein C-Atom); Harnstoff 158-161 (ein C-Atom).

Die erfindungsgemäßen hydrophilierten Polyisocyanate (P) weisen bevorzugt eine zahlenmittlere Isocyanatfunktionalität von $\geq 4$ und/oder ein gewichtsmittleres Molekulargewicht von $\geq 1.350$g/mol, bestimmt nach DIN EN Iso 13885-1:2021-11.

Die zahlenmittlere Isocyanatfunktionalität wird analog den obigen Ausführungen zur Bestimmung der zahlenmittleren Isocyanatfunktionalität von (A) bestimmt.

Vorzugsweise weisen die hydrophilierten Polyisocyanate (P) eine Viskosität von maximal 25.000 mPas bei 23 °C, bevorzugt maximal 10.000 mPas bei 23 °C, besonders bevorzugt maximal 8.000 mPas bei 23 °C auf, wobei die Viskosität bestimmt wird gemäß DIN EN ISO 3219:1994-10 bei einer Scherrate von 250 s-1.

Gegenstände der vorliegenden Erfindung sind auch die Verwendung der erfindungsgemäßen hydrophilierten Polyisocyanaten (P) zur Herstellung von Beschichtungsmitteln, Dichtstoffen und Klebstoffen, so wie die so erhältlichen Beschichtungsmittel, Dichtstoffe und Klebstoffe selbst. Bei diesen kann es sich um 1- oder 2-Komponenten-Systeme handeln.

Zur Herstellung von 1-Komponenten-Systemen können die Isocyanatgruppen der erfindungsgemäßen hydrophilierten Polyisocyanate (P) blockiert werden. In einer Ausführungsform liegen daher die Isocyanatgruppen der erfindungsgemäßen hydrophilierten Polyisocyanate (P) zumindest anteilig in mit wenigstens einem Blockierungsmittel F) blockierter Form vor. Dies bedeutet, dass zumindest (>_) 70 mol%, bevorzugt mindestens (>_) 85 mol%, besonders bevorzugt mindestens (>_) 95 mol% der Isocyanatgruppen in mit Blockierungsmitteln blockierter Form vorliegen.

Unter einem Blockierungsmittel werden Verbindungen verstanden, die mit einer Isocyanatgruppe reagieren und unter definierten Bedingungen wieder von dieser abgespalten werden können. Zur Blockierung können alle in der Polyurethanchemie üblichen Blockierungsmittel verwendet werden. Lediglich beispielhaft seien genannt Alkohole, Lactame, Oxime, Malonsäureester, Alkylacetoacetate, Triazole, Imidazole, Pyrazole und Amine wie Butanonoxim, Diisopropylamin, 1,2,4-Triazol, Dimethyl-1,2,4-triazol, Imidazol, Diethylmalonat, Acetessigsäure Ester, Acetonoxim, 3,5-Dimethylpyrazol, ε-Caprolactam, N-Methyl, N-Ethyl, N-(iso)propyl, N-n-Butyl, N-iso-Butyl, N-tert-Butylbenzylamin oder 1,1-Dimethylbenzylamin, N -Alkyl-N-1,1-Dimethylmethylphenylamin, Addukte von Benzylamin an Verbindungen mit aktivierten Doppelbindungen wie Malonester, N,N-Dimethylaminopropylbenzylamin und andere tertiäre Aminogruppen enthaltende gegebenenfalls substituierte Benzylamine und/oder Dibenzylamin. Weitere Beispiele sich eignender Blockierungsmittel sind CH-acide cyclische Ketone mit einer elektronenziehenden Gruppe in ortho-Stellung zur Ketogruppe, wie etwa einer Estergruppe, einer Sulfoxidgruppe, einer Sulfongruppe, einer Nitrogruppe, einer Phosphonatgruppe, einer Nitrilgruppe, einer Isonitrilgruppe oder einer Carbonylgruppe, sowie Kohlenwasserstoffharze mit phenolischen OH-Gruppen und gegebenenfalls substituierte Phenole, wie beispielsweise Cashewnussschalenprodukte, die mindestens Cardanol und/oder Cardol enthalten, wie sie z. B. in WO 2021/204741 A1 beschrieben sind.

In einer bevorzugten Ausführungsform werden die erfindungsgemäßen hydrophilierten und gegebenenfalls zumindest teilweise blockierten Polyisocyanate (P) in Form einer wässrigen Dispersion bei der Herstellung der Beschichtungsmittel, Dichtstoffe und Klebstoffe verwendet.

Die Beschichtungsmittel, Dichtstoffe und Klebstoffe können Verbindungen mit isocyanatreaktiven Gruppen enthalten. Die isocyanatreaktiven Verbindungen weisen bevorzugt eine Funktionalität an isocyanatreaktiven Gruppen von $\geq 2$ bis $\leq 6$ auf und sind bevorzugt ausgewählt aus der Gruppe bestehend aus -OH, -SH, -NH, - NH$_2$ und -(H)N-N$_2$H.

Bevorzugt sind hydroxyfunktionelle Verbindungen, beispielsweise die bereits vorangehend beschriebenen hydroxyfunktionellen Verbindungen.

In einer bevorzugten Ausführungsform werden Polyacrylatpoylole, Polyesterpolyole und/oder Polyesterurethanpolyole eingesetzt.

Die hydroxyfunktionellen Verbindungen können bevorzugt auch in Form von wässrigen Dispersionen eingesetzt werden, wie z.B. wie z.B. Polyacrylatdispersionen, Polyacrylatemulsionen, Alkyddispersionen, Polyurethan-Polyacrylatdispersionen, Polyurethandispersionen oder wässrige Expoxid-Harze.

Beispiele solcher Dispersionen sind die von der Covestro Deutschland AG vermarkteten Produkte des Typs Bayhydrol A (Polyacrylatpolyole, Bayhydrol E (Polyesterpolyole) und Bayhydrol U (Polyesterurethanpolyole).

Desweiteren können auch nicht-reaktive Polyurethandispersion eingesetzt werden. Darunter wird vorliegend ein Polyurethan oder ein Polyurethanharnstoff verstanden, der bevorzugt in Wasser dispergiert ist und der ausschließlich gegenüber Isocyanatgruppen reaktionsträge Gruppen aufweist. Bevorzugt sind die gegenüber Isocyanatgruppen reaktionsträgen Gruppen Urethan- und/oder Harnstoff- und/oder Carboxylat- und/oder Sulfonatgruppen. Bedingt durch den Herstellprozess ist es möglich, dass derartige Dispersionen geringe Mengen an Aminendgruppen aufweisen.

Beispiele für nicht-reaktive Polyurethandispersion sind die von der Covestro Deutschland AG vermarkteten Produkte des Typs Impranil, Baybond, Bayhydrol UH wie z.B. Impranil DLS, Impranil DLN, Impranil DLC/F, Baybond PU 406, Baybond PU 330, Bayhydrol UH 25 340/1 etc.

Es ist ebenfalls denkbar, weitere Vernetzerdispersionen, wie z.B. Polyisocyanate, die optional auch hydrophilierend wirkende Gruppen eingebaut haben können und freie oder ggf. blockierte Isocyanatgruppen enthalten oder Polyaziridine einzusetzen.

Die erfindungsgemäßen Beschichtungsmittel, Dichtstoffe und Klebstoffe können auch Katalysatoren zur Steuerung der Aushärtegeschwindigkeit enthalten, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(III)-octoat oder Molybdänglykolat.

Die erfindungsgemäßen Beschichtungsmittel, Dichtstoffe und Klebstoffe können auch noch folgende Bestandteile enthalten: Additive zur Formulierung von Beschichtungsmitteln wie Verlaufsmittel, Benetzungsmittel, Haftvermittler, Verdicker, Antioxidationsmittel, Farbpigmente, Pigmente, Koaleszensmittel, Entschäumer, Entlüfter, etc.

Ein weiterer Gegenstand der Erfindung sind Substrate, umfassend die Beschichtungsmittel, Dichtstoffe oder Klebstoffe in ungehärteter, teilweise gehärteter oder vollständig gehärteter Form.

Als Substrate kommen je nach Anwendung beispielsweise Glas, Metall, Gewebe, Leder, Fasern, Papier, Holz, Kunststoff, Stein und Beton in Betracht.

Ein weiterer Gegenstand der Erfindung ein Verfahren zur Beschichtung eines Substrats umfassend die Schritte

i) Bereitstellen eines gegebenenfalls vorbehandelten Substrats,
ii) Auftragen eines Beschichtungsmittels erhältlich gemäß der oben stehenden Verwendung und
iii) teilweises oder vollständiges Härten des Beschichtungsmittels.

Beispiele:

Alle Prozentangaben beziehen sich, soweit nicht anderslautend vermerkt, auf das Gewicht.

Die Bestimmung der NCO-Gehalte erfolgte titrimetrisch nach DIN EN ISO 11909:2007-05.

Die Rest-Monomeren Gehalte wurden nach DIN EN ISO 10283:2007-11 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Glanz der erhaltenen Beschichtungen wurde reflektometrisch nach DIN EN ISO 2813:1999-06 im 20°-Winkel gemessen.

Die Bestimmung der Pendeldämpfung nach König erfolgte nach DIN EN ISO 1522:2007-04 auf Glasplatten.

13C-NMR-Spektren wurden mit einem Bruker AV III HD 600 NMR Spektrometer mit Probenkopf Z150361_001 (CP BBO 600SS3 BB-H&F-05 ZE T) aufgenommen. Es wurden 512 Scans durchgeführt, bei einer Repititionszeit (D1) von 4 s und einer Messzeit (AQ) von 1,57 s.

Molekulargewichte wurden mittels Gelpermeationschromatographie gemäß DIN EN ISO 13885-1:2021-11 gemessen. Verwendet wurden vier Säulen (2x PSS SDV 50A, 5$\mu$, 2x PSS SDV 100A, 5$\mu$).

Zur Bestimmung der Dispergierbarkeit wurden 4 g Wasser mit 1 g Harz auf einem Schütteltisch schnell gemischt. Die Teilchengröße wurde anschließend mittels Laser-Korrelationsspektroskopie bestimmt.

Zur Prüfung der Beschichtungen auf Lösungsmittelbeständigkeit wurden jeweils kleine Mengen der Lösungsmittel Xylol, 1-Methoxypropyl-2-acetat, Ethylacetat und Aceton in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche der auf Glas applizierten Lacke gebracht und verblieben dort für 1 bzw. 5 Minuten. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in folgender Reihenfolge: Xylol, 1-Methoxypropyl-2-acetat, Ethylacetat, und Aceton in Form vier aufeinanderfolgender Ziffern.

Die Wasserbeständigkeit wurde gemäß den Kriterien bei der oben beschriebenen Lösungsmittelbeständigkeit bewertet. Dazu wurde jeweils ein Tropfen Wasser auf die Oberfläche der auf Glas applizierten Lacke gebracht. Der Tropfen wurde mit einem Schnappdeckelglas abgedeckt und für 24 h ruhen gelassen, bevor er für die Bewertung des Schadenbilds abgewischt wurde.

Der Hammer Polish Test ist ein Test, bei dem mittels eines 1kg schweren Hammers etwas Stahlwolle über eine Oberfläche gerieben wird. Ein Zyklus umfasst dabei das Vor- und Zurückschieben des Hammers.

Bayhydur ® 304 ist ein kommerziell erhältliches Produkt der Covestro Deutschland AG. Es handelt sich um ein hydrophiles Isocyanurat-basierendes und Allophanat-modifiziertes Polyisocyanat.

**Allophanat 1**

In einen 100 1-Reaktor wurden 49,56 kg Hexamethylendiisocynanat (Desmodur® H, Covestro Deutschland AG) vorgelegt, dreimal mit Stickstoff inertisiert und auf 100 °C aufgeheizt. Eine Mischung aus 554,6 g Trimethylolpropan und 690,3 g 1,3-Butandiol wurde langsam, über eine Stunde, zugetropft. Die Mischung löste sich dabei sofort im Polyisocyanat. Es wurde bei 100°C etwa 1,5 Stunden lang weiter gerührt, bis ein NCO von 46,5 % erreicht war. Anschließend wurde der Katalysator (2,54 g Zinkoctoat, gelöst in 48,26 g 2-Ethyhexanol) in vier gleichen Portionen nacheinander (ca. je fünf Minuten) zugegeben. Es wurde bei 100 °C etwa 1 Stunde lang weiter gerührt, bis ein NCO von 44,2 % erreicht war. Die Reaktion wurde dann durch Zugabe der Stopperlösung (5,08 g ortho-Phosphorsäure in 45,72 g 2-Ethylhexandiol) beendet.

Nach Filtration wurde das überschüssige HDI am Dünnschichtverdampfer bei 130 °C abgetrennt. Dem Harz (ca. 11 kg) wurden 0,22 g Isophtaloylchlorid in 4,14 g Isopropanol zur Stabilisierung beigemengt. Es hatte folgende Kenndaten:

| | |
|---|---|
| NCO-Gehalt: | 19,8 % |
| monomeres HDI: | 0,07 % |
| Viskosität (23°C): | 5200 mPas |

**Allophanat 2**

100 Teile Hexamethylendiisocyanat (HDI) wurden vorgelegt und auf 105 °C temperiert. Bei dieser Temperatur wurden unter Rühren 10 Teile Trimethylolpropan zugegeben. Dabei kam es zu einer Trübung, die sich erst nach einiger Zeit wieder auflöste. Nach Beendigung der Urethanisierungsreaktion wurde die Reaktionstemperatur wurde auf 95 °C abgesenkt. Anschließend wurde durch Zugabe einer 0,5%-igen Trimethylbenzylammoniumhydroxid-Lösung in 2-Ethylhexanol die Trimerisierungs- und Allophanatisierungsreaktion gestartet. Beim Erreichen eines NCO-Werts von 36 % wurde die Reaktion beendet, indem eine Stopperlösung (10 % Dibutylphosphat in HDI) in einem Gewichtsverhältnis von 100 Teilen Katalysatorlösung zu 3 Teilen Stopperlösung zugegeben wurden. Es wurde noch weitere 30 Minuten bei 95 °C gerührt und anschließend das verbliebene monomere HDI in einem Kurzwegverdampfer bei 140 °C und 0,1 mbar abgetrennt. Das erhaltene Polyisocyanat wies die folgenden Kenndaten auf.

| | |
|---|---|
| NCO-Gehalt: | 19,3 % |
| monomeres HDI: | 0,09 % |
| Viskosität (23°C): | 35000 mPas |

**Hydrophiliertes Polyisocyanat 1** (erfindungsgemäß)

In einen 1l-Vierhals-Rundkolben mit Rückflußkühler, beheizbarem Ölbad, mechanischem Rührer, Innenthermometer und Tropftrichter wurden 400 g Allophanat 1 vorgelegt, mit Stickstoff inertisiert und auf 50 °C aufgeheizt. Es wurden zunächst 90mg Dibutylzinndilaurat zugegeben und anschließend 57,14 g MPEG 350 langsam zugetropft bis der Ziel-NCO-Gehalt von 15,92 % unterschritten war. Schließlich wurden 50 mg Dibutyphosphat beigemengt und die Reaktionsmischung homogenisiert. Es wurde ein farbloses Harz erhalten.

| | |
|---|---|
| NCO-Gehalt: | 15,7 % |
| Viskosität (23°C): | 7670 mPas |
| Teilchengröße nach Dispergierung | 159 nm, stabil |

**Hydrophiliertes Polyisocyanat 2** (nicht erfindungsgemäß)

In einen 250 ml-Vierhals-Rundkolben mit Rückflußkühler, beheizbarem Ölbad, mechanischem Rührer, Innenthermometer und Tropftrichter wurden 102 g Allophanat 2 vorgelegt, mit Stickstoff inertisiert und auf 50 °C aufgeheizt. Es wurden zunächst 20mg Dibutylzinndilaurat zugegeben und anschließend 18 g MPEG 350 langsam zugetropft bis der Ziel-NCO-Gehalt von 14,65 % unterschritten war. Schließlich wurden 10 mg Dibutyphosphat beigemengt und die Reaktionsmischung homogenisiert. Es wurde ein farbloses Harz erhalten.

| NCO-Gehalt: | 14,61 % |
|---|---|
| Viskosität (23°C): | 19.750 mPas |
| Teilchengröße nach Dispergierung | 339nm, zerfällt schnell |

**Anwendungsbeispiel**

Variierende Gew.-Teile einer handelsüblichen Polyacrylatdispersion (Bayhydrol® A 2058; Fa. Covestro Deutschland AG, Leverkusen, DE) mit einem Festkörpergehalt von 42 Gew.-% wurden mit 0,4 Gew.-Teilen eines handelsüblichen Benetzungsmittels (Byk 347, Byk-Chemie GmbH), 0,3 Gew.-Teilen eines handelsüblichen Benetzungsmittels (Byk 333, Byk-Chemie GmbH) und variierenden Anteilen an Wasser, versetzt und durch intensives Rühren homogen vermischt. Die Formulierung wurde einen Tag lang ruhen gelassen.

Anschließend wurden variierende Gew.-Teile der hydrophilierten Polyisocyanate 1 und Bayhydur® 304 mit unterschiedlichen Anteilen Methoxypropylacetat und jeweils 3 Teilen Wasser versetzt. Diese Mischung wurde zwei Minuten lang bei 2000 min$^{-1}$ mit einem Dissolver gemischt. Anschließend wurden die Mischungen mittels eines 120 $\mu$m Nassrakels auf eine Glasplatte aufgetragen und 30 min bei 80 °C getrocknet, sowie 16 Stunden bei 60 °C gealtert.

Nachstehend zeigt Tabelle 1 die Zusammensetzungen der Beschichtungszusammensetzungen in Gew.-Teilen, Tabelle 2 die Ergebnisse der anwendungstechnischen Prüfungen der erhaltenen Beschichtungen im Vergleich.

**Tabelle 1**: Erfindungsgemäßes Beispiel 1 sowie Vergleichsbeispiel 2 - Zusammensetzung der Beschichtungsmittel

| Beispiel | 1 (erfindungs -gemäß) | 2 (Vergleich) |
|---|---|---|
| Bayhydrol A 2058 | 44,2 | 47,8 |
| BYK®-347 | 0,4 | 0,4 |
| BYK®-333 | 0,3 | 0,3 |
| Wasser | 6,3 | 5,4 |
| | | |
| Hydrophiliertes Polyisocyanat 1 | 21,0 | -- |
| Bayhydur ® 304 | -- | 19,5 |
| Methoxypropylacetat | 7,8 | 6,6 |
| Wasser | 3,0 | 3,0 |
| Festkörper (Gew.-%) | 48 | 48 |
| Verhältnis NCO/OH | 1,5 | 1,5 |
| Lösemittel | 9,7% | 8,3% |

**Tabelle 2:** Erfindungsgemäßes Beispiel 1 und Vergleichsbeispiel 2 - Lacktechnische Eigenschaften

| Beispiel | | 1 (erfindungs -gemäß) | 2 (Vergleich) |
|---|---|---|---|
| Schichtdicke [$\mu$m] nach Trocknung | | 46 | 37 |
| Pendeldämpfung (König) | | 69 | 109 |
| Wasserbeständigkeit | 24 h | 0 | 1 |
| Lösemittelbeständigkeit 5 min (X, MPA, EA, A) | 5 min | 0/0/1/3 | 1/1/2/3 |
| Kratzfestigkeit Hammer polish test | | | |
| | start | 80 | 85 |
| Glanz 20° | nach 10 Zyklen | 64 | 46 |
| | relativer Glanzerhalt | 80% | 54% |

Das erfindungsgemäße hydrophilierte Polysocyanat 1 hat im Vergleich zu dem nicht erfindungsgemäßen hydrophilierte Polysocyanat 2 eine deutlich geringere Viskosität und ergibt nach Dispergierung eine Dispersion, die über viele Stunden stabil ist. Das nicht erfindungsgemäße hydrophilierte Polysocyanat 2 ergibt dagegen eine sehr grobteilige Dispersion, die nach kurzer Zeit zerfällt und daher nicht anwendungstechnisch untersucht werden konnte.

Wie aus Tabelle 2 zu erkennen ist, erreicht das erfindungsgemäße hydrophilierte Isocyanatsystem (Beispiel 1) bessere Lösemittelbeständigkeiten als das nicht erfindungsgemäße System (Vergleichsbeispiel 2). Auch die Wasserbeständigkeit ist erhöht. Ebenfalls zeigt sich bei dem Verkratzungstest ein besserer Glanzerhalt und somit eine bessere Kratzbeständigkeit.

**Patentansprüche**

1. Hydrophilierte Polyisocyanate (P), erhältlich aus der Umsetzung (U)

   A) eines mit Allophanat- und gegebenenfalls Isocyanuratgruppen modifizierten Polyisocyanats, welches einen Anteil an Allophanatgruppen $\geq 50$ mol%, bevorzugt $\geq 50$ mol% bis $\leq 99$ mol%, bevorzugt $\geq 60$ mol% bis $\leq 98$ mol%, besonders bevorzugt $\geq 70$ mol% bis $\leq 98$ mol% aufweist, jeweils bezogen auf die Gesamtmenge an Allophanatgruppen und Isocyanuratgruppen im modifizierten Polyisocyanat und bestimmt durch NMR spektroskopische Analyse,
   und welches erhältlich ist aus der Umsetzung (U')

   A1) einer Mischung aus $A1_1$) mindestens einem monomeren Triol und $A1_2$) mindestens einem monomeren Diol,
   mit
   A2) mindestens einem monomeren Diisocyanat, welches aliphatisch und/oder cycloaliphatisch, gebundene Isocyanatgruppen aufweist,

   mit
   B) mindestens einer nicht-ionisch hydrophilierenden Verbindung mit mindestens einer isocyanatreaktiven Gruppe,
   gegebenenfalls in Anwesenheit
   C) mindestens eines, die Reaktion der Isocyanatgruppen der Komponente A) mit den isocyanatreaktiven Gruppen der Komponente B) beschleunigenden Katalysators und/oder
   D) mindestens eines Hilfs- und Zusatzstoffs.

2. Hydrophilierte Polyisocyanate (P) gemäß Anspruch 1, wobei das mindestens eine monomere Triol der Komponente $A1_1$) bis zu 15 Kohlenstoffatomen aufweist und/oder das mindestens eine monomere Diol der Komponente $A1_2$) bis zu 15 Kohlenstoffatomen.

3. Hydrophilierte Polyisocyanate (P) gemäß Anspruch 1 oder 2, wobei

   das mindestens eine monomere Triol der Komponente $A1_1$) 1,1,1-Trimethylolpropan, ist und/oder
   das mindestens eine monomere Diol der Komponente $A1_2$) ausgewählt ist aus der Gruppe bestehend aus 1,3-Butandiol und 1,4-Butandiol.

4. Hydrophilierte Polyisocyanate (P) gemäß einem der Ansprüche 1 bis 3, wobei die mit Allophanat- und gegebenenfalls Isocyanuratgruppen modifizierten Polyisocyanate (A) eine zahlenmittlere Isocyanatfunktionalität von $\geq 4$, bezogen auf den Feststoffgehalt von (A), und/oder ein gewichtsmittleres Molekulargewicht von $\geq 1.000$ g/mol, bestimmt nach DIN EN Iso 13885-1:2021-11, aufweisen.

5. Hydrophilierte Polyisocyanate (P) einem der Ansprüche 1 bis 4, wobei als Komponente B) einwertige im statistischen Mittel 5 bis 70, bevorzugt 5 bis 55 Ethylenoxideinheiten pro Molekül aufweisende Polyalkylenoxidpolyetheralkohole mit einem Anteil an Ethylenoxideinheiten von $\geq 30$ Gew.-%, eingesetzt werden.

6. Hydrophilierte Polyisocyanate (P) gemäß Anspruch 5, wobei reine Polyethylenoxidpolyetheralkohole eingesetzt werden.

7. Hydrophilierte Polyisocyanate (P) gemäß einem der Ansprüche 1 bis 6 mit einer zahlenmittleren Isocyanatfunktionalität von $\geq 4$ und/oder einem gewichtsmittleren Molekulargewicht von $\geq 1.350$ g/mol bestimmt nach DIN EN Iso 13885-1:2021-11.

**8.** Hydrophilierte Polyisocyanate (P) gemäß einem der Ansprüche 1 bis 7 mit einer Viskosität von maximal 25.000 mPas bei 23°C, bevorzugt maximal 10.000 mPas bei 23°C, besonders bevorzugt maximal 8.000 mPas bei 23°C auf, wobei die Viskosität bestimmt wird gemäß DIN EN ISO 3219:1994-10 bei einer Scherrate von 250 s-1 .

**9.** Verwendung von hydrophilierten Polyisocyanaten (P) gemäß einem der Ansprüche 1 bis 8 zur Herstellung von Beschichtungsmitteln, Dichtstoffen oder Klebstoffen.

**10.** Verwendung gemäß Anspruch 9, wobei die hydrophilierten Polyisocyanate (P) in Form einer wässrigen Dispersion vorliegen.

**11.** Beschichtungsmittel, Dichtstoffe oder Klebstoffe, erhältlich aus der Verwendung gemäß Anspruch 10 oder 9.

**12.** Verwendung gemäß Anspruch 10 oder 9 oder Beschichtungsmittel, Dichtstoffe oder Klebstoffe gemäß Anspruch 11, wobei es sich um 1- oder 2-Komponenten-Systeme handelt.

**13.** Substrate umfassend Beschichtungsmittel, Dichtstoffe oder Klebstoffe gemäß Anspruch 11 oder 12 in ungehärteter, teilweise gehärteter oder vollständig gehärteter Form.

**14.** Verfahren zur Beschichtung eines Substrats umfassend die Schritte

i) Bereitstellen eines gegebenenfalls vorbehandelten Substrats,
ii) Auftragen eines Beschichtungsmittels gemäß Anspruch 11 oder 12, und
iii) teilweises oder vollständiges Härten des Beschichtungsmittels.

Europäisches
Patentamt

European
Patent Office

Office européen
des brevets

**EUROPÄISCHER RECHERCHENBERICHT**

Nummer der Anmeldung

EP 24 22 0059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 314 747 A1 (NIPPON POLYURETHANE KOGYO KK [JP]) 28. Mai 2003 (2003-05-28) * Tabellen 1,2 * ----- | 1-14 | INV. C08G18/24 C08G18/28 C08G18/32 C08G18/73 C08G18/78 |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 2. Juni 2025 | Bergmeier, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
    Dokument

EPO FORM 1503 03.82 (P04C03)

**EP 4 759 854 A1**

## ANHANG ZUM EUROPÄISCHEN RECHERCHENBERICHT
## ÜBER DIE EUROPÄISCHE PATENTANMELDUNG NR.

EP 24 22 0059

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-06-2025

| Im Recherchenbericht angeführtes Patentdokument | Datum der Veröffentlichung | Mitglied(er) der Patentfamilie | Datum der Veröffentlichung |
|---|---|---|---|
| EP 1314747 A1 | 28-05-2003 | DE 60212047 T2 | 21-12-2006 |
| | | EP 1314747 A1 | 28-05-2003 |
| | | JP 3978767 B2 | 19-09-2007 |
| | | JP 2003160630 A | 03-06-2003 |
| | | KR 20030043611 A | 02-06-2003 |
| | | US 2003105267 A1 | 05-06-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0682012 A
- GB 994890 A
- EP 0000194 A
- EP 0712840 A
- WO 2019062383 A1
- EP 4303246 A1
- EP 0206059 A2
- EP 0959087 A1
- WO 200140347 A
- GB 2221465 A
- GB 2222161 A
- DE 3240613 A
- DE 3219608 A
- EP 0100129 A
- GB 1391066 A
- GB 1386399 A
- GB 809809 A
- EP 0056158 A
- EP 0056159 A
- EP 0033581 A
- EP 2883895 A
- DE 1667309 A
- EP 0013880 A
- EP 0047452 A
- EP 3765 A
- EP 10589 A
- DE 2631733 A
- EP 0671426 A
- EP 1599526 A
- US 4789705 A
- EP 1229016 A
- WO 2005087828 A
- EP 0339396 A
- EP 0379914 A
- EP 0443167 A
- EP 0798299 A
- EP 0896009 A
- EP 0962455 A
- EP 0668271 A
- WO 1999023128 A
- EP 0102482 A
- WO 2013167404 A
- WO 2021204741 A1

### In der Beschreibung aufgeführte Nicht-Patentliteratur

- **LAAS et al.** *J. Prakt. Chem.*, 1994, vol. 336, 185-200
- *Justus Liebigs Annalen der Chemie*, 1949, vol. 562, 75-136
- *European Polymer Journal*, 1979, vol. 16, 147-148
- Ullmanns Encyclopädie der technischen Chemie. Verlag Chemie, vol. 19, 31-38